# EUROPÄISCHE PATENTSCHRIFT

(11) **EP 0 754 992 B1**
(45) Veröffentlichungstag und Bekanntmachung des Hinweises auf die Patenterteilung: **02.05.2001**
(21) Anmeldenummer: 96111253.9
(22) Anmeldetag: 12.07.1996
(51) Int. Cl.: G05B 19/4099, G06F 17/60

(54) **Verfahren und Vorrichtung für die Herstellung von dreidimensionalen Bauteilen**
Method and device for manufacturing three dimensional construction elements
Méthode et dispositif pour fabriquer des éléments de construction à trois dimensions

(30) Priorität: 17.07.1995 US 503721
(43) Veröffentlichungstag der Anmeldung: 22.01.1997
(73) Patentinhaber: American GFM Corporation, Chesapeake, Virginia 23323 (US)
(72) Erfinder: Marxrieser, Gerhard, Chesapeake, Virginia 23323 (US); Zarzer, Erich Alexander, Dr., 4030 Linz (AT)
(74) Vertreter: Mey, Klaus-Peter, Dr.-Ing. Dipl.-Wirtsch.-Ing.

(56) Entgegenhaltungen:
- EP-A- 0 618 542
- EP-A- 0 640 943
- US-A- 4 107 589
- US-A- 5 317 943
- US-A- 5 430 831
- VDI Z, Bd. 135, Nr. 5, 1.Mai 1993, Seiten 32, 35-37, XP000303847 WESTKAEMPER E ET AL: "3D-SCHACHTELUNGSSYSTEM FUER DIE FERTIGUNG KLEINER FRAESTEILE AUS PLATTENMATERIAL"
- PROC. OF 18TH INTERM. TECHNICAL CONF. NUMERICAL CONTROL SOCIETY, 17. - 20.Mai 1981, DALLAS,TEXAS,US, Seiten 56-82, XP002015541 R. NEIL: "CAD/CAM USE IN NUMERICAL CONTROL"

## Beschreibung

Die Erfindung betrifft eine Vorrichtung sowie ein Verfahren zum Herstellen einer Vielzahl von dreidimensionalen Teilen aus einem Materialstück mit minimalem Materialverlust, umfassend:
- Mittel zum Positionieren von Konturen der dreidimensionalen Teile für eine optimale Anordnung im Materialstück, um das innerhalb der dreidimensionalen Umrisse nicht vorhandene Material zu minimieren,
- Mittel zum Ausschneiden der dreidimensionalen Teile aus dem Materialstück,
- Mittel zum Betätigen der Schneidmittel entlang der zweidimensionalen Konturen.

Das Verfahren umfasst die Arbeitsschritte:
- Definieren eines dreidimensionalen Umrisses für jedes Teil,
- Positionieren der abgebildeten Konturen zu einer optimalen Anordnung innerhalb des Materialstücks, um das innerhalb der resultierenden dreidimensionalen Umrisse nicht enthaltene Material zu minimieren,
- Betätigen der Schneidvorrichtung, um das Materialstück entlang der abgebildeten zweidimensionalen Konturen zu schneiden und jedes der dreidimensionalen Teile fertigzustellen.

Die vorliegende Erfindung betrifft allgemein ein System, ein Verfahren und eine Vorrichtung für die Herstellung von dreidimensionalen (3D) Bauteilen aus unterschiedlichen Materialien (z. B. Wabenbaustoff etc.), bei dem der Materialverlust minimiert wird und automatisch Teilprogramme erstellt werden.

Existierende Maschinen mit fünf Achsen werden verwendet, um 3D Bauteile herzustellen, wobei Teilprogramme für Einzelteile mit Hilfe von CAD/NC-Systemen erstellt werden. Diese Maschinen mit fünf Achsen wenden die Technologie des Fräsens an, um die Oberfläche des Teils zu bearbeiten. In Abhängigkeit von der Größe des Fräskopfes und der Größe des Werkzeugs ist der Materialverlust erheblich, bis jeweils ein Einzelteil fertiggestellt ist.

Wenn zweidimensionale (2D) Teile bearbeitet werden müssen, ist der Einsatz von Schneidwerkzeugen (Laser, Wasserstrahl, mechanisches Messer, Ultraschall-Schneiden) oder Stanzmaschinen zusammen mit Positioniersystemen (einer Software, die zur Berechnung der optimalen Position und Drehung jedes Teils zwecks Maximierung der Materialausnutzung verwendet wird) für die automatische Erzeugung von Teilprogrammen wohlbekannt.

Während die technische und ökonomische Frage der Herstellung einer gegebenen Anzahl von 2D Teilen mit einer minimalen Materialmenge vollständig beantwortet ist, ist die Frage der Herstellung von verschiedenen dreidimensionalen Teilen mit optimaler Materialausnutzung auf eine automatisierte Weise noch nicht beantwortet.

Das Dokument VDI-Z, Bd. 135, 5/93 S. 32, 35 - 37, WESTKÄMPER et al. "3D-Schachtelungssysteme für die Fertigung kleiner Frästeile aus Plattenmaterial" beschreibt die Fertigung dreidimensionaler Werkstücke aus einer gemeinsamen größeren Platte von Material, worin die Werkstücke verschachtelt angeordnet sind. Die Abhandlung betrifft Verschnittplanung und Erstellung der erforderlichen NC-Programme, wobei das System den Anwender sowohl bei der Orientierungsermittlung für die Werkstücke, als auch bei der 3D-Verschachtelung und der anschließenden NC-Programmerstellung unterstützen soll, indem Teilaufgaben automatisiert werden. Bei der Anordnung der Werkstücke auf einer Platte handelt es sich um ein dreidimensionales Schachtelungsprogramm, wobei die Werkstücke nicht nur entsprechend ihrer auf die Plattenoberfläche projizierten Konturgeometrie zu verschachteln sind, sondern wegen beispielsweise schräger Außenkonturen auch in der dritten Dimension verschachtelt werden müssen.

Das Dokument Proc. 18th Intern. Technical Conf. Numerical control Soc. 5/81 Texas, US, S. 56 - 82; R. NEIL, CAD-CAM, "use in Numerical control", beschreibt die vorteilhafte Verwendung eines interaktiven grafischen Systems bei der Werkzeugführung zur Herstellung von dreidimensionalen Teilen.

Die US-A-5 430 831 beschreibt eine Methode zum optimalen Einlagern, Stapeln oder Transportieren von Gegenständen in Stauräumen. Die US-A-5 317 943 beschreibt ein Ultraschall-Schneidwerkzeug zum Schneiden von öffnungen einschließlich nicht linearer Grenzlinien in einem Material oder Werkstück. Die EP-A-0 618 542 offenbart Software für den rechnergestützten Entwurf oder zum Abbilden eines Umrisses als zweidimensionale Kontur auf drei zueinander senkrechte Ebenen. Eine automatische Werkzeugwechselvorrichtung ist schließlich aus der US-A-4 107 589 bekannt.

Ausgehend vom vorgenannten Stand der Technik liegt der Erfindung die Aufgabe zugrunde, eine Vorrichtung und Software-Werkzeuge bereitzustellen, die zum Bearbeiten von in einem CAD-System definierten dreidimensionalen Teilen, ausgehend von einem dreidimensionalen Block, mit regelmäßigen oder unregelmäßigen Formen und aus einem beliebigen Typ von Material, wie Wabenbaustoff etc., auf eine automatisierte Weise bestimmt sind und die einen minimalen Materialverlust gewährleisten.

Zur Lösung der Aufgabe wird eine Vorrichtung entsprechend den Merkmalen des Anspruchs 1 vorgeschlagen. Ein entsprechendes Verfahren ist durch die Arbeitsschritte und Maßnahmen des Anspruchs 7 gekennzeichnet.

Entsprechend dem ersten Aspekt der vorliegenden Erfindung wird eine Vorrichtung bereitgestellt: eine Maschine mit fünf oder sechs Achsen, die mit (a) einem Ultraschall-Schneidwerkzeug, das wahlweise die Anbringung von verschiedenen Typen von Messern (einschließlich, aber nicht beschränkt auf scheibenförmige Messer, Schneidblätter von dreieckiger Form etc.) und Fräswerkzeugen gestattet, oder (b) mit einer Schnellaufspindel für Fräswerkzeuge ausgestattet ist. Dieses Schneidverfahren ermöglicht Materialeinsparungen, da insbesondere beim Ultraschall-Schneiden der Werkzeugdurchmesser nahezu null beträgt und daher die Muster näher beieinander angeordnet werden können.

Entsprechend einem zweiten Aspekt der vorliegenden Erfindung wird ein Verfahren zur automatisierten Erzeugung von Teilprogrammen bereitgestellt, welches einen minimalen Materialverlust gewährleistet und mit dem die im vorangegangenen Absatz erwähnte Vorrichtung betrieben wird. Dieses Verfahren besteht aus den Schritten (a) der Anwendung eines standardmäßigen CAD/NC-Systems zur Erzeugung von Datendateien (gewöhnlich APT- oder CLDATA-Datei), welche die Werkzeugweg-Informationen enthalten, die erforderlich sind, um ein einzelnes dreidimensionales Teil zu bearbeiten, (b) der Anwendung eines neuen Software-Moduls, im weiteren "2D Abbildung" (2D mapping) genannt, welches eine 2D Kontur erzeugt, eine Umhüllung der Projektion des 3D Teils auf die

X-Y-Ebene und der zusätzlichen Menge von umgebendem Material, die während des Prozesses des Schneidens und Umrißfräsens entfernt wird (was bereits Material einsparen kann, aufgrund der Möglichkeit des dreidimensionalen Ultraschall-Schneidverfahrens zusammen mit der Möglichkeit der Verwendung von speziell geformten Messern), und (c) der Anwendung eines standardmäßigen 2D Positioniersystems, um die mittels "2D Abbildung" erhaltenen 2D Formen auf optimale Weise anzuordnen (minimaler Materialverlust).

Obwohl die vorliegende Erfindung in der beschriebenen Form eine - Verbesserung gegenüber existierenden Verfahren durch Abbildung der Projektion auf die X-Y-Ebene zum Zwecke der optimalen Positionierung der Teile in dieser Ebene bereitstellt, zieht die Erfindung auch noch größere Materialeinsparungen durch zusätzliche Drehungen und Abbildungen in der X-Z-Ebene und der Y-Z-Ebene in Betracht. Durch Nutzung solcher zusätzlichen und weiteren Abbildungen in diesen anderen beiden zueinander senkrechten Ebenen können die dreidimensionalen Teile innerhalb des Materials, aus dem sie dann durch die Schneidvorrichtungen herausgeschnitten werden, optimal positioniert werden.

Das Ergebnis des Positioniersystems, nämlich die Position in X, Y und Z und der Drehwinkel, die angeben, wo und in welcher Drehposition das Teil zu bearbeiten ist, wird zusammen mit den die Werkzeugweg-Informationen enthaltenden CAD/NC-Dateien verwendet, um automatisch Teilprogramme zu erzeugen, welche die Herstellung einer bestimmten Anzahl von möglicherweise unterschiedlichen Teilen auf eine optimale Weise ermöglichen.

### ZU DEN ZEICHNUNGEN

FIG. 1 ist eine perspektivische Ansicht einer Schneidmaschine, welche die Prinzipien der vorliegenden Erfindung verkörpern kann.

FIG. 2 ist eine Detailansicht eines Ultraschall-Schneidwerkzeugs, das in der Maschine von FIG. 1 verwendet wird.

FIG. 3 ist eine Detailansicht eines Fräswerkzeugs, welches in der Maschine von FIG. 1 verwendet werden kann.

FIG. 4 ist eine perspektivische Ansicht eines Teils, welches entsprechend den Prinzipien der vorliegenden Erfindung aus dem umgebenden Material herausgeschnitten werden kann.

FIG. 5 ist eine schematische Draufsicht einer 2D Abbildung des Teils von FIG. 4 auf die X-Y-Ebene.

FIG. 6 ist eine schematische Darstellung der 2D Abbildung des Teils von FIG. 4 auf die X-Z-Ebene.

FIG. 7 ist ein Flußdiagramm, welches die Schritte des Verfahrens des Herausschneidens der Teile entsprechend der vorliegenden Erfindung veranschaulicht.

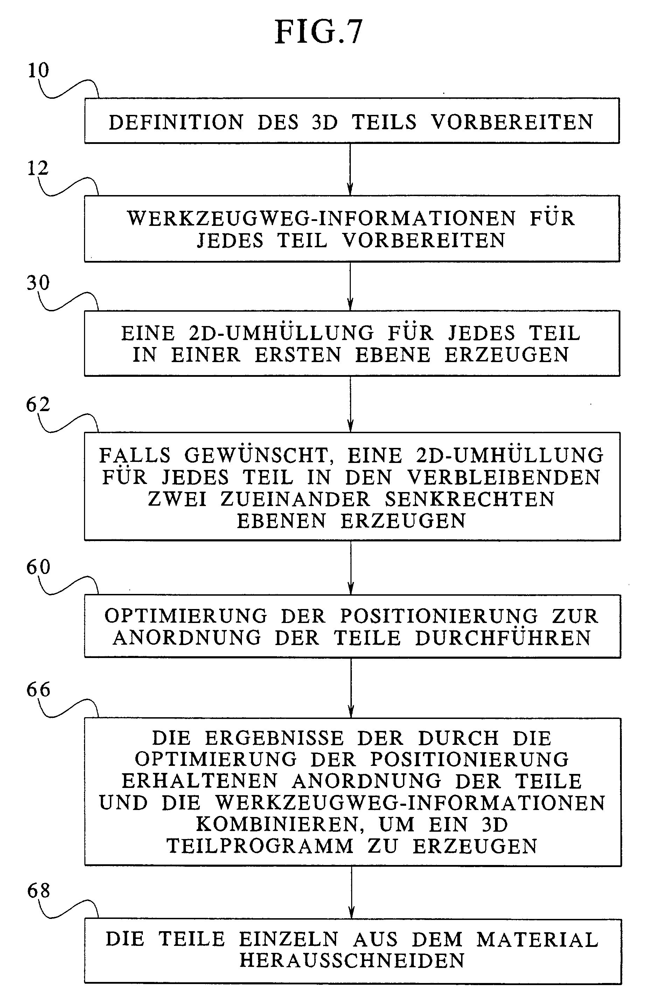

In FIG. 7 ist ein Verfahren des Herausschneidens von 3D Teilen aus einem Material gemäß der vorliegenden Erfindung in Form eines Flußdiagramms dargestellt.

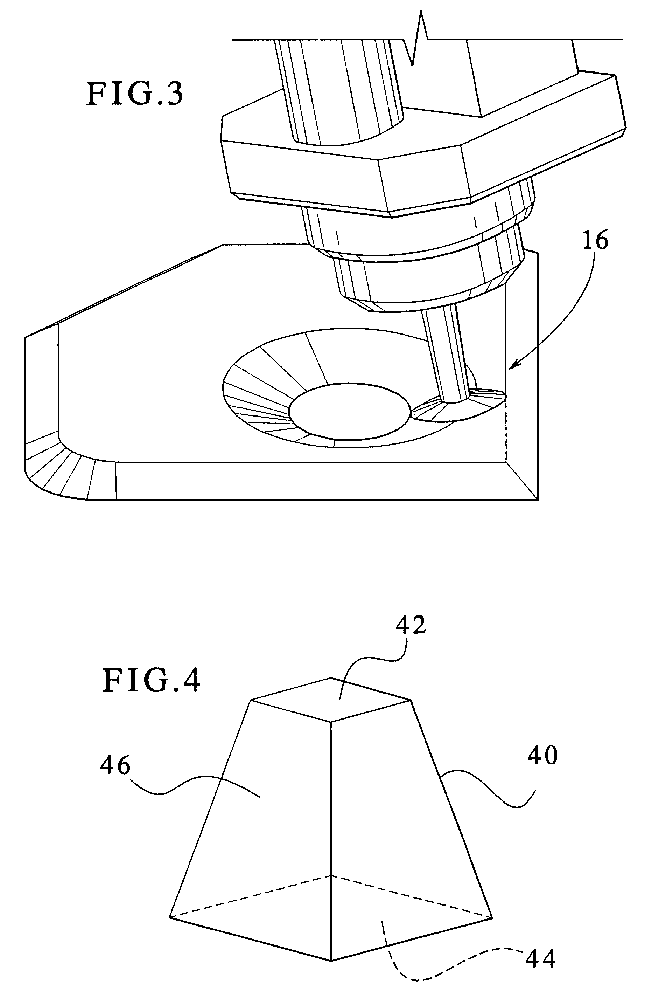

Ein standardmäßiger CAD/NC-Software-Modul wird verwendet, um in Schritt 10 die dreidimensionale Geometrie des Werkstücks zu definieren. Diese Definition enthält solche Informationen, wie eine eventuell erforderliche Ausrichtung des Teils bezüglich des Materials, wie etwa Faserrichtung usw. Der NC-Teil des Moduls gestattet die Definition des Werkzeugweges in Schritt 12 (Anordnung des Schneidwerkzeugs), wobei alle möglichen verfügbaren Werkzeuge berücksichtigt werden, wie etwa Ultraschall-Messer 14 (FIG. 2) von unterschiedlicher Form (scheibenförmige Messer, Schneidblätter von dreieckiger Form etc.) und Fräswerkzeuge 16 (FIG. 3) wie, aber nicht beschränkt auf, Fingerfräser oder Kugelfräser. Das Ergebnis dieses Verfahrens wird für jedes einzelne Teil in einer gesonderten Datei gespeichert (gewöhnlich eine APT- oder CLDATA-Datei).

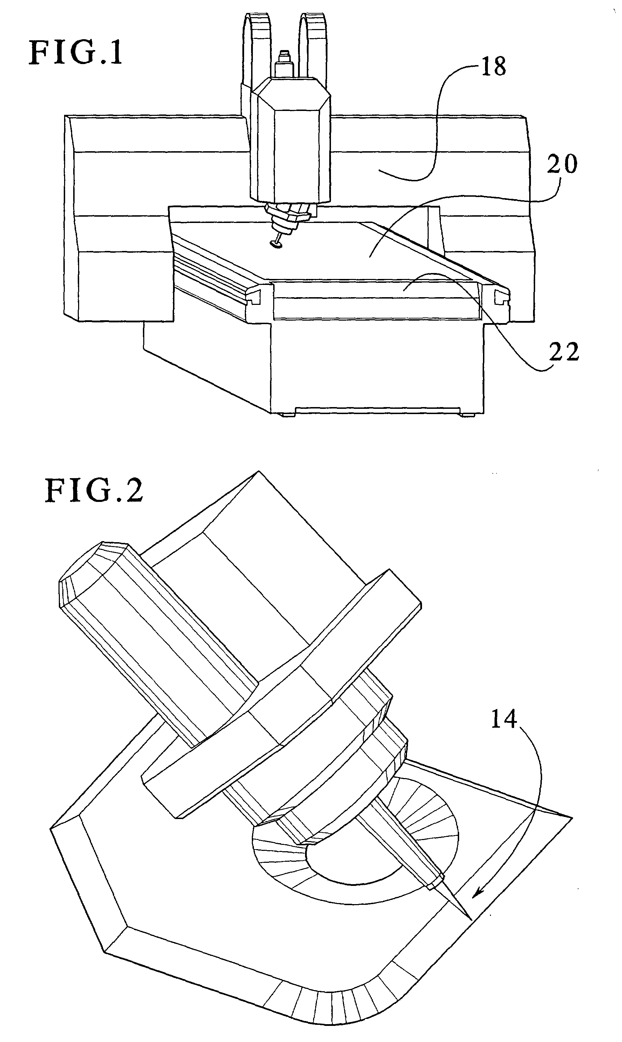

Die Ultraschall-Schneidwerkzeuge 14 oder Fräswerkzeuge 16 sind Werkzeuge, die in einer Ultraschall-Schneidmaschine 18 (FIG. 1) verwendet werden können, welche mindestens drei Bewegungsachsen hat und vorzugsweise fünf oder sechs Achsen hat, bezüglich derer eine Bewegung möglich ist, einschließlich einer Bewegung der Schneidvorrichtung relativ zu dem Material 20, das auf einem Bett 22 der Maschine getragen wird, entlang der X-Achse, der Y-Achse und der Z-Achse. Weitere Achsen sind vorgesehen, um ein Ausschneiden von Teilen aus dem Material 20 unter vorgegebenen Winkeln zu ermöglichen. Der nächste Vorgang nach dem Definieren der Werkzeugwege in Schritt 12 ist die "2D Abbildung", die in Schritt 30 (FIG. 7) vorgenommen wird. Die zweidimensionale Abbildung verwendet die Informationen der 3D Geometrie und erzeugt einen zweidimensionalen Umriß oder eine zweidimensionale Kontur, welche als die Basis des allgemeinen Prismas oder Zylinders aus dem betreffenden Material von minimaler Größe definiert ist, das bzw. der erforderlich ist, um jenes Teil herzustellen. Das Material außerhalb dieses Körpers ist nicht erforderlich und wird während der Bearbeitung des Teils nicht berührt oder verletzt. Dieser zweidimensionale Umriß muß die Projektion des dreidimensionalen Teils auf die X-Y-Ebene oder allgemein auf die Stützebene, wie etwa das Maschinenbett 22, vollständig umfassen. Der Umriß ist an solchen Stellen größer, wo während der Bearbeitung des Teils zusätzliches Material entfernt werden muß, um komplizierte Oberflächen herzustellen. Die zweidimensionale Abbildung muß den Bezugspunkt berücksichtigen (Anfangsposition der Bewegungen der Maschine in bezug auf den Koordinatenursprung der X-Y-Ebene). Das Ergebnis des Prozesses der 2D Abbildung von Schritt 30 wird in Geometrie-Dateien in einem beliebigen Format gespeichert, das vom Positioniersystem verarbeitet werden kann (z. B. DXF-, IGES-Dateien).

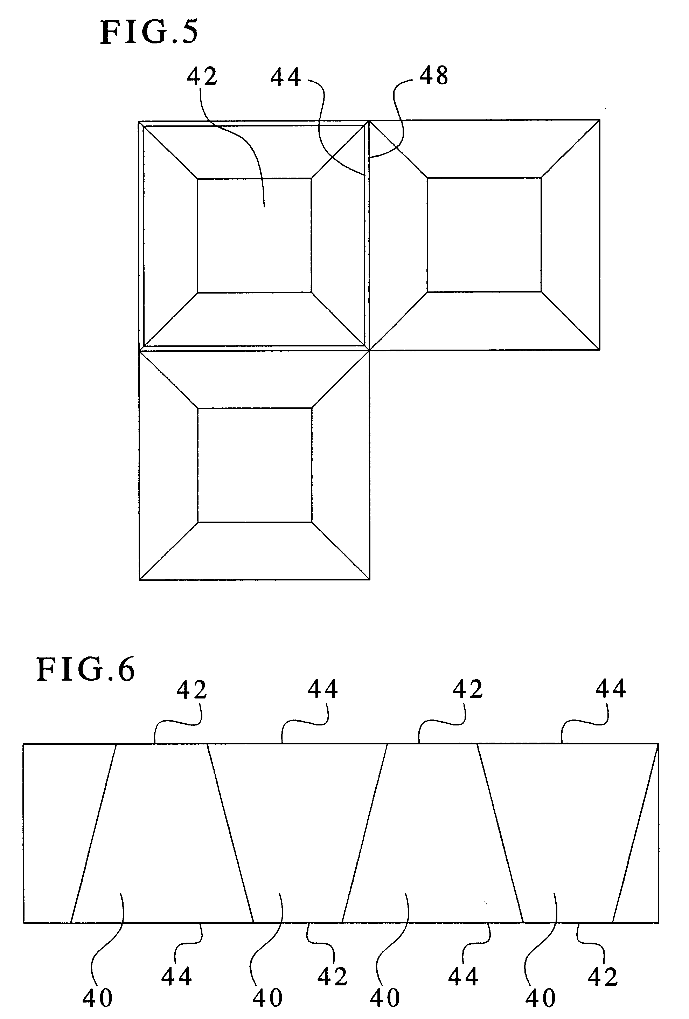

Als Beispiel zeigt FIG. 4 ein dreidimensionales Teil 40, welches eine kleine rechteckige Oberseite 42 und eine große rechteckige Unterseite 44 hat, mit schrägen ebenen Seitenwänden 46. FIG. 5 zeigt eine 2D Abbildung dieses Teils auf die X-Y-Ebene. Man erkennt, daß eine äußere Kontur 48 ein wenig größer bemessen ist als die Unterseite 44, um einem gewissen minimalen Materialverlust Rechnung zu tragen, der durch den Schneidvorgang entsteht. Bei dieser Anordnung wird angenommen, daß aus dem Material zuerst regelmäßige rechteckige Blöcke mit den größten Maßen X und Y ausgeschnitten werden, die den größten Maßen X und Y des Teils 40 entsprechen.

In Schritt 60 (FIG. 7) wird eine Optimierung der Positionierung durchgeführt, die zum Ergebnis hat, daß aus den Erzeugnissen gebildete Muster so in dem Material 20 angeordnet werden, daß die Materialausnutzung optimiert und etwaiger Materialverlust minimiert wird. Dies ist in FIG. 5 dadurch dargestellt, daß die rechteckigen Blöcke 48 so aneinandergefügt sind, daß zwischen benachbarten Blöcken kein Zwischenraum verbleibt.

In Schritt 62 wird ein fakultatives Verfahren bereitgestellt, durch das noch größere Materialeinsparungen erreicht werden können. In diesem weiteren Schritt wird für jedes Teil eine zweidimensionale Umhüllung oder eine zweidimensionale Kontur für die verbleibenden beiden zueinander senkrechten Ebenen, das heißt die X-Z- und die Y-Z-Ebene, erzeugt. Diese Informationen werden dann in Schritt 60 verwendet, um zu ermöglichen, daß eine Positionierung in allen drei Ebenen durchgeführt wird, so daß die 3D Konturen der Gegenstände ausgenutzt werden, um eine größere Materialeinsparung zu erzielen.

Zum Beispiel zeigt FIG. 6 eine optimierte Abbildung des Teils 40 von FIG. 4, bei der jedes zweite Muster um 180° um die X-Achse gedreht ist mit dem Zweck, die zueinander komplementären Neigungen der Seitenflächen zu nutzen, um den Materialverlust weiter zu senken. Diese Anordnung setzt natürlich voraus, daß die Eigenschaften des Materials und des resultierenden Teils diese Drehung oder Umkehrung des Teils gestatten; diese Information ist jedoch Bestandteil der Informationen, die in der in Schritt 10 vorbereiteten ursprünglichen Definition des dreidimensionalen Teils enthalten sind.

Die Ergebnisse der in Schritt 60 durch die Optimierung der Positionierung erhaltenen Anordnung der Teile und die Werkzeugweg-Informationen aus Schritt 12 werden in Schritt 66 miteinander kombiniert, um ein 3D Teilprogramm zu erstellen, welches dann in die numerisch gesteuerte Maschine 18 für das Ausschneiden der Teile geladen werden kann. Das Programm umfaßt sowohl Informationen über die Werkzeugwahl als auch Informationen über den Schneidprozeß. Das Ergebnis ist, daß, wenn die Maschine 18 eingesetzt wird, alle gewünschten Teile bearbeitet und aus dem Material herausgeschnitten werden (Schritt 68), ohne daß das für andere Teile zu verwendende Material beschädigt wird, so daß die Gesamt-Materialausnutzung optimiert wird.

## Patentansprüche

1. Vorrichtung zum Herstellen einer Vielzahl von dreidimensionalen Teilen (40) aus einem Materialstück (20) mit minimalem Materialverlust, umfassend:
- Soft- und Hardware-Mittel zum Positionieren von Konturen der dreidimensionalen Teile (40) für eine optimale Anordnung im Materialstück (20), um das innerhalb der dreidimensionalen Umrisse nicht vorhandene Material zu minimieren,
- Hardware-Mittel (14, 16, 18) zum Ausschneiden der dreidimensionalen Teile (40) aus dem Materialstück (20),
- Hardware-Mittel (18) zum Betätigen der Schneidmittel (14, 16) entlang der zweidimensionalen Konturen, gekennzeichnet durch
- Software-Mittel zum Definieren eines dreidimensionalen Umrisses für jedes Teil (40),
- Soft- und Hardware-Mittel zum Abbilden jedes Umrisses auf eine Ebene des Materialstücks (20) mit einer zweidimensionalen Kontur,
- eine Bearbeitungsvorrichtung mit wenigstens drei Achsen, die wenigstens eine schnelllaufende Frässpindel oder wenigstens eine Ultraschall-Schneidvorrichtung (18) aufweist, die mit einem hochfrequent schwingenden Messer (14) oder Fräser (16) ausgestattet ist,
- eine Vielzahl von Werkzeugen und ein Software-Mittel zur automatischen Auswahl des gewünschten Werkzeugs sowie eine Vorrichtung zum automatischen Wechseln desselben.

2. Vorrichtung nach Anspruch 1, **dadurch gekennzeichnet,** dass sie Software umfassende Mittel für den rechnergestützten Entwurf besitzt.

3. Vorrichtung nach Anspruch 1 oder 2, **dadurch gekennzeichnet,** dass sie Abbildungs-Software umfassende Mittel zum Abbilden der dreidimensionalen Teile (40) besitzt.

4. Vorrichtung nach einem oder mehreren der Ansprüche 1 bis 3, **dadurch gekennzeichnet,** dass sie Mittel zum Abbilden jedes Umrisses als zweidimensionale Kontur auf drei zueinander senkrechte Ebenen des Materialstücks (20) besitzt.

5. Vorrichtung nach einem oder mehreren der Ansprüche 1 bis 4, **dadurch gekennzeichnet,** dass die Ultraschall-Schneidvorrichtung (18) zur Betätigung eines Werkzeugs (14) bzw. (16) fünf Achsen aufweist.

6. Vorrichtung nach einem oder mehreren der Ansprüche 1 bis 4, **dadurch gekennzeichnet,** dass die Ultraschall-Schneidvorrichtung (18) zur Betätigung eines Werkzeugs (14) bzw. (16) sechs Achsen besitzt.

7. Verfahren zum Herstellen einer Vielzahl von dreidimensionalen Teilen (40) durch Ausschneiden aus einem Materialstück (20) mit minimalem Materialverlust, unter Verwendung einer Schneidvorrichtung, umfassend die Arbeitsschritte:
- Definieren eines dreidimensionalen Umrisses für jedes Teil (40),
- Positionieren der abgebildeten Konturen zu einer optimalen Anordnung innerhalb des Materialstücks (20), um das innerhalb der resultierenden dreidimensionalen Umrisse nicht enthaltene Material zu minimieren,
- Betätigen der Schneidvorrichtung (18), um das Materialstück (20) entlang der abgebildeten zweidimensionalen Konturen zu schneiden und jedes der dreidimensionalen Teile (40) fertigzustellen, **dadurch gekennzeichnet,**
- dass das Abbilden jedes Umrisses eines auszuschneidenden Teils (40) mit einer zweidimensionalen Kontur vorgenommen wird,
- dass der Schritt der Werkzeugauswahl das Bereitstellen wenigstens einer Ultraschall-Schneidvorrichtung (18) umfasst, die mit einem Messer oder einem Fräser (16) auszustatten ist, wobei das Auswählen des Werkzeugs (14) bzw. (16) die Verwendung einer automatischen Werkzeugwechseleinrichtung umfasst,
- dass die Betätigung der Schneidvorrichtung (18) das automatische Auswählen eines gewünschten Werkzeugs (14, 16) aus einer Vielzahl von Werkzeugen umfasst.

8. Verfahren nach Anspruch 7, **dadurch gekennzeichnet,** dass der Schritt des Definierens eines dreidimensionalen Umrisses für jedes Teil (40) die Verwendung von Software für den rechnergestützten Entwurf umfasst.

9. Verfahren nach Anspruch 7, **dadurch gekennzeichnet,** dass der Schritt des Abbildens jedes Umrisses eines auszuschneidenden Teils (40) die Verwendung von Abbildungs-Software umfasst.

10. Verfahren nach einem oder mehreren der Ansprüche 7 bis 9, **dadurch gekennzeichnet,** dass der Schritt der Betätigung eines Werkzeugs (14) bzw. (16) die Verwendung einer Ultraschall-Schneidvorrichtung (18) mit wenigstens drei Achsen umfasst.

11. Verfahren nach einem oder mehreren der Ansprüche 7 bis 9, **dadurch gekennzeichnet,** dass der Schritt der Betätigung eines Werkzeugs (14) bzw. (16) die Verwendung einer Ultraschall-Schneidvorrichtung (18) mit fünf oder sechs Achsen umfasst.

12. Verfahren nach einem oder mehreren der Ansprüche 7 bis 10, **dadurch gekennzeichnet,** dass der Schritt des Abbildens der auszuschneidenden Teile (40) die Darstellung jedes Umrisses als zweidimensionale Kontur auf eine Vielzahl zueinander senkrechter Ebenen des Materialstücks umfasst, bevorzugt auf drei zueinander senkrechte Ebenen des Materialstücks (20).

## Claims

1. Device for manufacturing a plurality of three-dimensional parts (40) from a piece of material (20) with minimum material wastage, comprising:
- software and hardware means for positioning profiles of the three-dimensional parts (40) for an optimum arrangement in the piece of material (20) so as to minimise the material not lying within the three-dimensional contours,
- hardware means (14, 16, 18) for cutting the three-dimensional parts (40) out of the piece of material (20),
- hardware means (18) for operating the cutting means (14, 16) along the two-dimensional profiles, characterised by
- software means for defining a three-dimensional contour for each part (40),
- software and hardware means for mapping each contour onto a plane of the piece of material (20) with a two-dimensional profile,
- a machining device with at least three axes which has at least one high-speed milling spindle or at least one ultrasonic cutting device (18) which is equipped with a knife (14) oscillating at a high frequency or a milling cutter (16),
- a plurality of tools and a software means for automatically selecting the desired tool as well as a device for automatically changing the latter.

2. Device according to Claim 1, characterised in that it has means comprising software for computer-aided design.

3. Device according to Claim 1 or 2, characterised in that it has means comprising mapping software for mapping the three-dimensional parts (40).

4. Device according to one or more of Claims 1 to 3, characterised in that it has means for mapping each contour as a two-dimensional profile onto three planes, which are perpendicular to one another, of the piece of material (20).

5. Device according to one or more of Claims 1 to 4, characterised in that the ultrasonic cutting device (18) for operating a tool (14) or (16) has five axes.

6. Device according to one or more of Claims 1 to 4, characterised in that the ultrasonic cutting device (18) for operating a tool (14) or (16) has six axes.

7. Method for manufacturing a plurality of three-dimensional parts (40) by cutting out of a piece of material (20) with minimum material wastage, using a cutting device, comprising the working steps of:
- defining a three-dimensional contour for each part (40),
- positioning the mapped profiles for an optimum arrangement within the piece of material (20) so as to minimise the material not contained within the resulting three-dimensional contours,
- operating the cutting device (18) in order to cut the piece of material (20) along the mapped two-dimensional profiles and complete each of the three-dimensional parts (40), characterised in
- that the mapping of each contour of a part (40) to be cut out is carried out with a two-dimensional profile,
- that the tool selection step comprises the provision of at least one ultrasonic cutting device (18) which is to be equipped with a knife or a milling cutter (16), wherein the selection of the tool (14) or (16) comprises the use of an automatic tool-changing device,
- that the operation of the cutting device (18) comprises the automatic selection of a desired tool (14, 16) from a plurality of tools.

8. Method according to Claim 7, characterised in that the step of defining a three-dimensional contour for each part (40) comprises the use of software for computer-aided design.

9. Method according to Claim 7, characterised in that the step of mapping each contour of a part (40) to be cut out comprises the use of mapping software.

10. Method according to one or more of Claims 7 to 9, characterised in that the step of operating a tool (14) or (16) comprises the use of an ultrasonic cutting device (18) with at least three axes.

11. Method according to one or more of Claims 7 to 9, characterised in that the step of operating a tool (14) or (16) comprises the use of an ultrasonic cutting device (18) with five or six axes.

12. Method according to one or more of Claims 7 to 10, characterised in that the step of mapping the parts (40) to be cut out comprises the representation of each contour as a two-dimensional profile on a plurality of planes, which are perpendicular to one another, of the piece of material, preferably on three planes, which are perpendicular to one another, of the piece of material (20).

## Revendications

1. Dispositif de fabrication d'un grand nombre de pièces tridimensionnelles (40) dans un morceau de matière (20) avec une perte minimale de matière, comprenant
• des moyens de programmes et de circuits pour positionner les contours des pièces tridimensionnelles (40) pour une disposition optimale dans la matière (20), afin de minimiser la matière qui ne se trouve pas à l'intérieur des contours tridimensionnels,
• des circuits (14, 16, 18) pour découper des pièces tridimensionnelles (40) du morceau de matière (20),
• des circuits (18) pour actionner les moyens de coupe (14, 16) le long de contours bi-dimensionnels,
caractérisé par
• des programmes pour définir un contour tridimensionnel de chaque pièce (40),
• des programmes et des circuits pour copier chaque contour dans un plan de la matière (20) avec un contour bi-dimensionnel,
• un dispositif d'usinage à au moins trois axes ayant au moins une broche de fraise tournant rapidement ou au moins un dispositif de découpe aux ultrasons (18), équipé d'un couteau oscillant à haute fréquence (14) ou d'une fraise (16),
• un grand nombre d'outils et de programmes pour sélectionner automatiquement l'outil souhaité, et un dispositif pour changer automatiquement l'outil.

2. Dispositif selon la revendication 1,
caractérisé en ce qu'
il comprend des programmes pour un développement assisté par un calculateur.

3. Dispositif selon l'une quelconque des revendications 1 ou 2,
caractérisé en ce qu'
il comprend des moyens à programme de copie pour copier des pièces tridimensionnelles (40).

4. Dispositif selon l'une ou plusieurs des revendications 1 à 3,
caractérisé en ce qu'
il comprend des moyens pour copier chaque contour comme contour bi-dimensionnel sur trois plans orthogonaux du morceau de matière (20).

5. Dispositif selon l'une ou plusieurs des revendications 1 à 4,
caractérisé en ce qu'
il comporte un dispositif de découpe aux ultrasons (18) pour actionner un outil (14, 16) suivant cinq axes.

6. Dispositif selon l'une ou plusieurs des revendications 1 à 4,
caractérisé en ce que
le dispositif de découpe aux ultrasons (18), pour actionner un outil (14, 16), comporte six axes.

7. Procédé de fabrication d'un grand nombre de pièces tridimensionnelles (40) par découpe dans un morceau de matière (20) avec perte de matière réduite au minimum, en appliquant un dispositif de coupe, comprenant les étapes suivantes :
• on définit le contour tridimensionnel de chaque pièce (40),
• on positionne les contours copiés pour une disposition optimale dans le morceau de matière (20), pour qu'à l'intérieur des contours tridimensionnels résultants, la matière soit réduite au minimum,
• on actionne le dispositif de coupe (18) pour couper le morceau de matière (20) suivant les contours bi-dimensionnels copiés et fabriquer chacune des pièces tridimensionnelles (40),
caractérisé en ce qu'
• on copie chaque contour d'une pièce à découper (40) avec un contour au moins bi-dimensionnel,
• l'étape de sélection d'outils comprend la fourniture d'au moins un dispositif de coupe aux ultrasons (18) équipé d'un couteau ou d'une fraise (16),
• la sélection de l'outil (14, 16) comprenant l'utilisation d'une installation automatique de changement d'outil,
• on actionne le dispositif de coupe (18) et on sélectionne automatiquement un outil souhaité (14, 16) parmi un grand nombre d'outils.

8. Procédé selon la revendication 7,
caractérisé en ce que
l'état de définition d'un contour tridimensionnel pour chaque pièce (40) comprend l'utilisation de programmes pour son développement assisté par ordinateur.

9. Procédé selon la revendication 7,
caractérisé en ce que
l'étape de copie d'un contour d'une pièce à découper (40) comprend l'utilisation d'images de programme.

10. Procédé selon l'une ou plusieurs des revendications 7 à 9,
caractérisé en ce que
l'étape d'actionnement d'un outil (14, 16) comprend l'utilisation d'un dispositif de découpe aux ultrasons (18) travaillant sur au moins trois axes.

11. Procédé selon l'une ou plusieurs des revendications 7 à 9,
caractérisé en ce que
l'étape d'actionnement d'un outil (14, 16) comprend l'utilisation d'un dispositif de découpe aux ultrasons (18) avec cinq ou six axes.

12. Procédé selon l'une ou plusieurs des revendications 7 à 10,
caractérisé en ce que
l'étape de copie de la pièce à découper (40) comprend la représentation de chaque contour comme contour bi-dimensionnel sur un grand nombre de plans perpendiculaires du morceau de matière, cette étape comprenant de préférence trois plans orthogonaux du morceau de matière (20).
